# FASCICULE DE BREVET EUROPEEN

(11) **EP 0 531 179 B1**
(45) Date de publication et mention de la délivrance du brevet: **08.03.1995**
(21) Numéro de dépôt: 92402157.9
(22) Date de dépôt: 27.07.1992
(51) Int. Cl.: B60J 5/06, B60K 15/04

(54) **Dispositif de sécurité pour porte coulissante de véhicule automobile**
Sicherheitsvorrichtung für Schiebetür eines Kraftfahrzeuges
Security device for sliding door of motor vehicle

(30) Priorité: 05.09.1991 FR 9110962
(43) Date de publication de la demande: 10.03.1993
(73) Titulaire: AUTOMOBILES PEUGEOT, 75116 Paris (FR); AUTOMOBILES CITROEN, 92200 Neuilly-sur-Seine (FR)
(72) Inventeur: Jamilloux, Olivier, F-78540 Vernouillet (FR)
(74) Mandataire: Seytre, Françoise

(56) Documents cités:
- GB-A- 728 648
- GB-A- 2 131 864
- US-A- 4 620 744

## Description

L'invention concerne les véhicules automobiles à portes latérales coulissantes et, plus particulièrement, ceux qui possèdent une trappe de réservoir de carburant s'ouvrant perpendiculairement à la carrosserie du véhicule.

Lorsqu'une telle trappe est implantée dans la zone de coulissement de l'une des portes latérales, la manoeuvre intempestive de celle-ci, lorsque la trappe est ouverte, peut entraîner une détérioration de l'une et/ou de l'autre.

Pour éviter ce genre de dommage, l'invention propose un dispositif de sécurité capable d'interdire l'ouverture de la porte coulissante au-delà de la zone de débattement de la trappe du réservoir, lorsque celle-ci est en position ouverte comportant un détecteur de l'état, ouvert ou fermé de la trappe (Dispositif analogue, par exemple, à celui selon US-A-4 620 744) caractérisé en ce qu'il coopère avec un dispositif d'arrêt du chariot de guidage de la porte dans un rail, de façon à bloquer ledit chariot en amont du plan de débattement de la trappe, lorsque la porte est manoeuvrée en position d'ouverture.

Dans un mode de réalisation de l'invention, le dispositif détecteur de l'état de la trappe est un contacteur muni d'un doigt mobile, placé en appui sur ladite trappe, lorsqu'elle est en position fermée, et rappelé en position active sortie, lors de l'ouverture de celle-ci.

Le dispositif d'arrêt du chariot de guidage de la porte comporte un moteur actionnant une butée engagée dans une ouverture de la paroi inférieure du rail de guidage, de façon à faire passer ladite butée d'une position basse dans laquelle elle se trouve au-dessous du bras de manoeuvre du chariot, jusqu'à une position levée dans laquelle elle est placée en travers du trajet dudit bras dans le rail précité.

D'autres caractéristiques et avantages de l'invention apparaîtront à la lecture de la description détaillée qui va suivre, pour la compréhension de laquelle on se reportera aux dessins annexés, dans lesquels :
- La figure 1 est une vue latérale partielle d'un véhicule automobile à portes coulissantes équipé d'un dispositif selon l'invention,
- la figure 2 est une vue en coupe, selon 2-2 de la figure 1, de la trappe de réservoir de carburant et,
- la figure 3 est une vue en coupe, selon 3-3 de la figure 1, du rail de la porte coulissante.

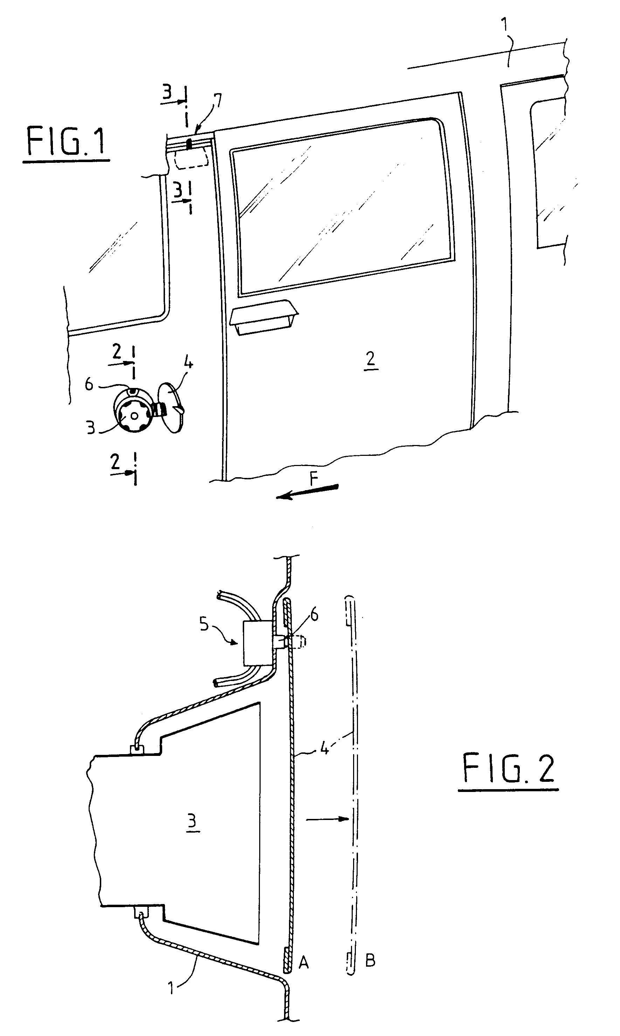

Sur la figure 1, on voit la partie latérale de la carrosserie 1 d'un véhicule automobile équipée d'une porte arrière coulissante 2. L'ouverture de cette porte est obtenue par une manoeuvre axiale, selon la flèche F. Dans la partie arrière du véhicule, est également implantée l'entrée 3 du réservoir de carburant munie d'une trappe 4 de recouvrement, représentée en position d'ouverture sur la figure 1. On voit que ce dispositif est dans la zone de débattement de la porte 2 et que, par conséquent, lorsque la trappe est dans la position représentée, le coulissement de la porte vient faire buter celle-ci contre la trappe, ce qui est susceptible d'entraîner des dommages, notamment à la peinture de l'une et/ou de l'autre.

Pour éviter cet inconvénient, un contacteur 5 (figure 2) est fixé sur la carrosserie 1 du véhicule, au voisinage de l'entrée 3 du réservoir de carburant, de façon que son doigt mobile 6 soit en appui, en position rétractée et inactive, sur la trappe 4, lorsque celle-ci est fermée.

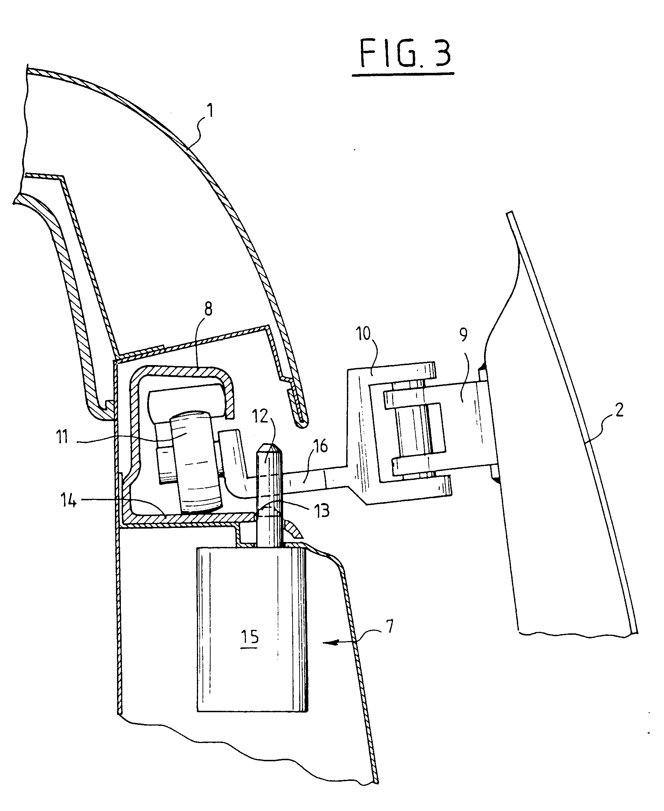

Le contacteur 5 est relié électriquement à un dispositif d'arrêt 7 implanté dans la carrosserie du véhicule, au voisinage du rail 8 de guidage de la porte (figure 3), en amont du plan de débattement de la trappe 4, par rapport au sens de manoeuvre matérialisé par la flèche F, sens d'ouverture de la porte.

Le dispositif d'arrêt 7 est bien visible sur la figure 3. La porte 2 est reliée par une charnière 9 à un chariot 10 dont le galet 11 circule dans le rail 8. Le dispositif d'arrêt 7 comporte une butée 12 engagée dans une ouverture 13 pratiquée dans la paroi inférieure 14 du rail 8. La butée 12 est actionnée par un dispositif approprié, par exemple un moteur électrique 15, entre deux positions : une position escamotée (représentée en pointillés sur la figure 3) dans laquelle elle affleure à peine la paroi 14 du rail et se trouve, en tout cas, au-dessous du bras 16 du chariot 10, et une position sortie dans laquelle elle est placée en travers du trajet dudit bras 16 dans la rail 8.

On a déjà compris, à la lecture de la description précédente le fonctionnement du dispositif. Lorsque la trappe 4 commence à s'ouvrir, passant de la position A à la position B (représentées sur la figure 2), le doigt 6 du contacteur 5 passe, par exemple sous l'action d'un ressort de rappel (non représenté), de sa position inactive (en traits pleins sur la figure 2) à sa position active (en pointillés) dans laquelle il actionne le circuit du contacteur 5 lequel commande la mise en marche du moteur 15.

Celui-ci manoeuvre la levée de la butée 12 qui vient s'interposer dans le trajet du bras 16 empêchant ainsi la porte de s'ouvrir plus avant.

En sens inverse, lorsque la trappe 4 se referme, elle appui sur le doigt 6 qui se rétracte en position inactive. Le contacteur 5 envoie un second signal de commande au moteur 15 qui manoeuvre, en conséquence, la butée 12 laquelle s'escamote dans la paroi 14 du rail 8, libérant le chariot 10.

Bien entendu, on pourrait concevoir d'autres dispositifs permettant d'assurer la même fonction de sécurité. En particulier, si la manoeuvre de la porte coulissante est motorisée, le détecteur de l'état de la trappe 4 peut agir directement sur ce moteur pour en commander l'arrêt, en coopération éventuelle avec un capteur de la position de la porte coulissante.

De même, la détection de l'état de la trappe peut être réalisée au moyen d'un capteur optique.

## Revendications

1. Dispositif de sécurité permettant d'interdire l'ouverture de la porte coulissante (2) d'un véhicule automobile au-delà de la zone de débattement de la trappe (4) du réservoir d'essence, lorsque celle-ci est en position ouverte comportant un détecteur (5,6) de l'état, ouvert ou fermé de la trappe (4) caractérisé en ce qu'il coopère avec un dispositif d'arrêt (7) du chariot de guidage (10) de la porte (2) dans un rail (8), de façon à bloquer ledit chariot en amont du plan de débattement de la trappe (4), lorsque la porte est manoeuvrée en position d'ouverture.

2. Dispositif de sécurité selon la revendication 1,
caractérisé en ce que le dispositif détecteur de l'état de la trappe (4) est un contacteur (5) muni d'un doigt mobile (6), placé en appui sur ladite trappe, lorsqu'elle est en position fermée, et rappelé en position active sortie, lors de l'ouverture de celle-ci.

3. Dispositif de sécurité selon la revendication 1 ou 2,
caractérisé en ce que le dispositif d'arrêt (7) du chariot de guidage (10) de la porte (2) comporte un moteur (15) actionnant une butée (12) engagée dans une ouverture (13) de la paroi inférieure (14) du rail (8) de guidage, de façon à faire passer ladite butée d'une position basse dans laquelle elle se trouve au-dessous du bras de manoeuvre (16) du chariot, jusqu'à une position levée dans laquelle elle est placée en travers du trajet dudit bras dans le rail précité.

## Claims

1. A security device allowing the sliding door (2) of a motor vehicle to be prevented from opening beyond the clearance zone of the petrol tank hatch (4) when the latter is in an open position, comprising a detector (5, 6) of the open or closed state of the hatch (4) characterized in that it cooperates with a stop device (7) for the guide carriage (10) of the door (2) in a rail (8), so as to block said carriage upstream of the clearance plane of the hatch (4), when the door is manoeuvred into an open position.

2. A security device according to claim 1, characterized in that the detector device for the state of the hatch (4) is a contactor (5) provided with a movable pin (6) placed against said hatch, when it is in a closed position, and drawn back into an active protruding position at the time said hatch is opened.

3. A security device according to claim 1 or 2, characterized in that the stop device (7) for the guide carriage (10) of the door (2) comprises a motor (15) actuating a stop (12) engaged in an opening (13) of the lower wall (14) of the guide rail (8), so as to cause said stop to pass from a low position in which it is located below the manoeuvring arm (16) of the carriage, as far as a raised position in which it is placed across the path of said arm in the above-mentioned rail.

## Patentansprüche

1. Sicherheitsvorrichtung zum Verhindern der Öffnung der Schiebetür (2) eines Kraftfahrzeugs über den Schwenkbereich der Tankklappe (4) hinaus, wenn letztere in offener Position ist, mit einem Detektor (5, 6) für den offenen oder geschlossenen Zustand der Tankklappe (4),
**dadurch gekennzeichnet**, daß
sie mit einer Haltevorrichtung (7) zum Anhalten des Wagens (10) zusammenwirkt, durch den die Tür (2) in einer Schiene (8) geführt wird, um den Wagen vor der Schwenkebene der Klappe (4) zu blockieren, wenn die Tür in offener Position bewegt wird.

2. Sicherheitsvorrichtung nach Anspruch 1, dadurch gekennzeichnet, daß der Detektor für den Zustand der Tankklappe (4) ein Berührungsschalter (5) ist, der mit einem beweglichen Finger (6) versehen ist, der an die Klappe drückt, wenn diese in geschlossenem Zustand ist und bei deren Öffnung in die aktive, ausgefahrene Position übergeht.

3. Sicherheitsvorrichtung nach Anspruch 1 oder 2, dadurch gekennzeichnet, daß die Haltevorrichtung (7) zum Anhalten des Führungswagens (10) der Tür (2) einen Motor (15) umfaßt, der einen Anschlag (12) betätigt, der in eine Öffnung (13) der unteren Wandung (14) der Führungsschiene (8) eingreift, so daß der Anschlag aus einer niedrigen Position, in der er sich unterhalb des Betätigungsarms (16) des Wagens befindet, in eine angehobene Position übergeht, in der er die Bahn des Arms in der Schiene kreuzt.
